# EUROPEAN PATENT APPLICATION

(11) **EP 1 865 295 A1**
(43) Date of publication of application: **12.12.2007**
(21) Application number: 07107670.7
(22) Date of filing: 08.05.2007
(51) Int. Cl.: G01F 1/684, G01F 1/692

(54) **Flow sensor transducer with dual spiral wheatstone bridge elements**

(30) Priority: 06.06.2006 US 448356
(71) Applicant: Honeywell International Inc., Morristown, NJ 07962 (US)
(72) Inventor: Kilian, Wayne T., Richardson, TX 75081 (US)
(74) Representative: Haley, Stephen

(57) **Abstract**

A flow sensor transducer can measure fluid flow rates as a fluid flows though a channel and under an air bridge. Resistive thermal devices (RTDs) and a heater are on top of the air bridge with two RTDs upstream of the heater and two downstream. The RTDs can be connected in a Wheatstone bridge configuration. A magnetoresistive material that changes its electrical resistance based on its temperature can be used to form the RTDs. The temperature response of magnetoresistive materials, however, can change due to magnetic fields and to the material's magnetic history. Forming the RTDs into a dual spiral structure minimizes the effect of magnetic fields. As such, a magnetoresistive material such as permalloy can be used instead of an expensive material such a platinum. The resulting flow sensor transducer can be formed using standard semiconductor processing techniques and is less expensive than sensors containing platinum.

## Description

Embodiments relate to resistance temperature detectors (RTDs), flow sensors and sensor systems. Embodiments also relate to semiconductor processing. Embodiments additionally relate to using magnetoresistive materials in RTDs and Wheatstone bridges.

The measurement of fluid flows is important in manufacturing, medicine, environmental monitoring, and other areas. One type of flow sensor measures the rise in temperature of a fluid flowing past a heater. Smaller temperature rises correspond to faster flow. Gases and liquids are both fluids and their flow rates can be measured by flow sensors that include temperature sensors and heaters.

RTDs are sensors made from a material, such as platinum, that exhibits a change in electrical resistance based on a change in temperature. Current technology provides systems and methods for producing RTDs and heaters on substrates using well- established semiconductor processing techniques. Those skilled in the art of semiconductor manufacturing are familiar with these systems and methods such as photolithography, deposition, vapor deposition, etch, wet etch, plasma etch, reactive ion etch, as well as numerous other processes.

Platinum is very expensive. Flow sensing systems and methods based on RTDs that use materials that are less expensive than platinum are desired. Aspects of the embodiments directly address the shortcoming of current technology by overcoming difficulties in using certain less expensive materials.

The following summary is provided to facilitate an understanding of some of the innovative features unique to the embodiments and is not intended to be a full description. A full appreciation of the various aspects of the embodiments can be gained by taking the entire specification, claims, drawings, and abstract as a whole.

It is therefore an aspect of the embodiments to provide a substrate such as a wafer typically used in semiconductor processing. The substrate can be a silicon wafer, a glass wafer, or a quartz wafer. A silicon wafer having a top dielectric layer such as silicon nitride (Si₃N₄) can provide a platform for mechanical support and electrical isolation of RTDs. The nitride layer and silicon substrate respectively form the top and bottom of the platform.

it is also an aspect of the embodiments to have a channel in the substrate and an air bridge spanning the channel. For example, a substrate having a nitride layer over bulk silicon can be etched to form the channel and air bridge. Openings can be etched through the nitride layer to expose the bulk silicon. The silicon can then be etched to create a channel under the nitride layer, and between the openings. The air bridge is an area of nitride overlying the channel. A fluid, such as air or water, can flow through the channel. Fluid flowing through the channel has a flow direction. Those practiced in the art of semiconductor processing know of systems and methods for processing a substrate to obtain channels and air bridges.

It is another aspect of the embodiments to have a heater on the air bridge. The heater is made from a resistive material that heats up when an electrical current flows through it. Two upstream resistance temperature detectors (RTD)s and two downstream RTDs can also be formed on top of the air bridge. A fluid flowing in the flow direction first passes the upstream RTDs, then the heater, and then the downstream RTDs. The RTDs and the heater can be made from the same material. Those practiced in the art of semiconductor processing know of systems and methods for producing heaters and RTDs on substrates and air bridges.

It is yet another aspect of the embodiments that at least one of the RTDs has a dual spiral structure. Magnetic fields can affect the electrical resistance of magnetoresistive materials, such as permalloy. Permalloy is the name commonly used for a class of alloys containing nickel iron and possibly other elements. Magnetoresistive materials such as permalloy can be sensitive to their magnetic history, meaning magnetic fields applied in the past as well as the present can superimpose an error signal on the temperature-induced resistance change of a RTD. A spiral structure can minimize the effect of magnetic fields, past and present, on a magnetoresistive RTD, and a dual spiral structure can be constructed using a single planar conductive layer. For example, a fluid flow sensor having dual spiral structured permalloy RTDs can be as accurate as one having platinum RTDs, and without additional interconnect complexity.

It follows from certain aspects of the embodiments that the most practicable shape for the dual spiral RTDs is a square, or in general a rectangle. For example, available area on a rectangular shaped air bridge can be more efficiently utilized with rectangular RTDs as opposed to round, oval or general polygonal shapes.

it is a further aspect of certain embodiments to use a Wheatstone bridge to obtain accurate measurements of the resistance differences between the upstream and the downstream RTDs. The resistance changes correlate directly to temperature changes and thereby to fluid flow rate. Those practiced in the art of resistive sensors are familiar with Wheatstone bridges.

It is a yet further aspect of some embodiments to provide a reference resistor made from the same material as the RTDs and placed away from the fluid flow and heater. The reference resistor can be used to measure properties of the substrate and the RTD material. For example, the reference resistor can measure the substrate temperature.

The accompanying figures, in which like reference numerals refer to identical or functionally similar elements throughout the separate views and which are incorporated in and form a part of the specification, further illustrate aspects of the embodiments and, together with the background, brief summary, and detailed description serve to explain the principles of the embodiments.

Fig. 1 illustrates a composite, top view of all layers comprising a flow sensor in accordance with aspects of the embodiments;

Fig. 2 illustrates a side view of a substrate in accordance with aspects of certain embodiments;

Fig. 3 illustrates a side view of a flow sensor in accordance with aspects of certain embodiments;

Fig. 4 illustrates a side view of a substrate having dielectric and conductor layers in accordance with aspects of some embodiments;

Fig. 5 illustrates two side views of a flow sensor with patterned dielectric and conductor layers in relation to a channel and air bridge structure in accordance with aspects of some embodiments;

Fig. 6 illustrates dual spiral RTDs in accordance with aspects of the embodiments;

Fig. 7 illustrates a Wheatstone bridge in accordance with aspects of certain embodiments; and

Fig. 8 illustrates a high level flow diagram of producing a flow sensor in accordance with aspects of the embodiments.

The particular values and configurations discussed in these non-limiting examples can be varied and are cited merely to illustrate at least one embodiment and are not intended to limit the scope thereof. In general, the figures are not to scale.

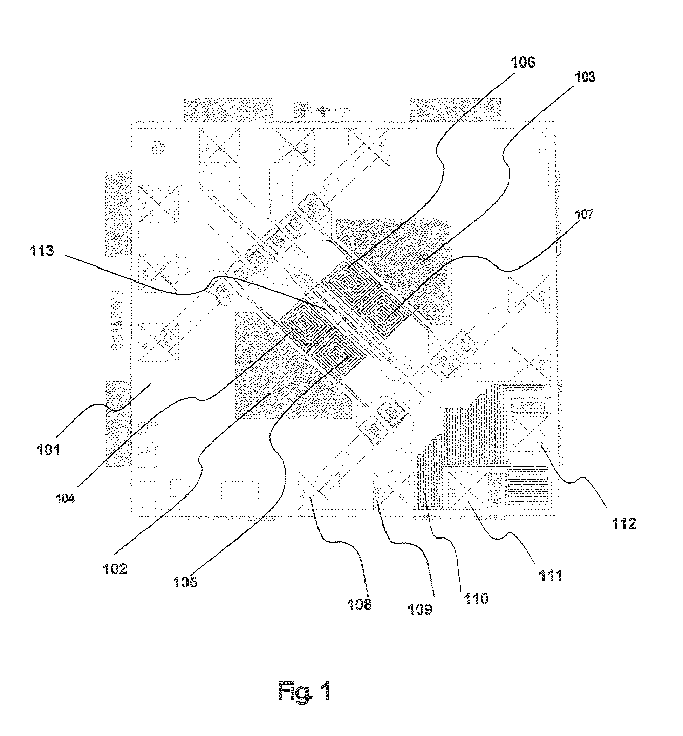

Fig. 1 illustrates a composite top view of all layers representing a complete flow sensor, residing on a substrate 101 in accordance with aspects of the embodiments. A fluid can flow from a channel inlet 102 to a channel outlet 103. As the fluid flows, it passes a first upstream temperature sensor 104 and a second upstream temperature sensor 105. The fluid can then be heated by a heater 113. The heated fluid then flows past a first downstream temperature sensor 106 and a second downstream temperature sensor 107.

A first contact pad 108 and a second contact pad 109 are electrically connected to the second upstream temperature sensor 105. An electrical current can flow into the first contact pad 108, through the second upstream temperature sensor 105 and out the second contact pad 109. The other temperature sensors are similarly connected to contact pads. The contact pads can be used to connect the temperature sensors to one another and to external circuitry.

A reference resistor 110 is electrically connected across a third contact pad 111 and a fourth contact pad 112. The reference resistor 110 can be made of the same material as the temperature sensors. As such, the reference resistor 110 can be used to measure properties of the temperature sensor materials. The reference resistor 110 can also be used to measure the temperature of the substrate.

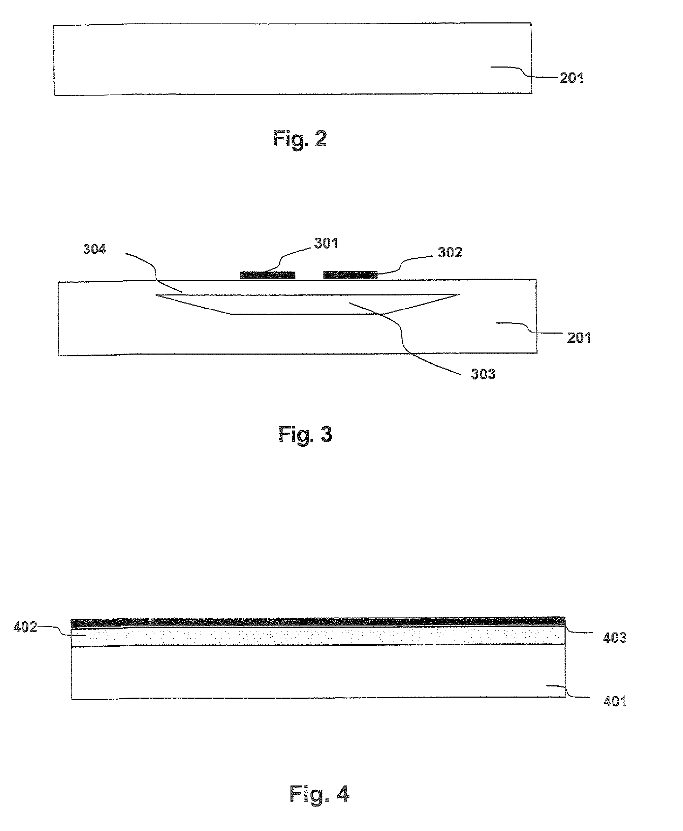

Fig. 2 illustrates a side view of a substrate 201 in accordance with aspects of certain embodiments. The substrate 201 can be a wafer such as those used in semiconductor processing. Substrates of silicon, glass, quartz, and other materials are often used in semiconductor processing.

Fig. 3 illustrates a side cross section view of a flow sensor in accordance with aspects of certain embodiments. A channel 303 through the substrate 201 provides a pathway for fluid flow. An air bridge 304 supports temperature sensors and a heater such as the first upstream temperature sensor 301 and the second upstream temperature sensor 302. A fluid such as air or water flowing through the channel 303 and possibly above the air bridge 304 transfers energy from the heater to the downstream temperature sensors. The upstream temperature sensors 301 and 302 can measure the fluid temperature before it is heated. The channel 303 is illustrated with sloped sidewalls as typically result from a KOH etch process. Other etch processes can produce other channel shapes.

Fig. 4 illustrates a side cross section view of a substrate 401 having dielectric 402 and conductor 403 layers in accordance with aspects of some embodiments. A silicon substrate can have a silicon nitride (Sl₃N₄) layer 402 and a permalloy (NiFe) layer 403. The nitride layer can have a thickness of approximately 5000 angstroms. The permalloy layer can have a thickness ranging from 100 to 400 angstroms.

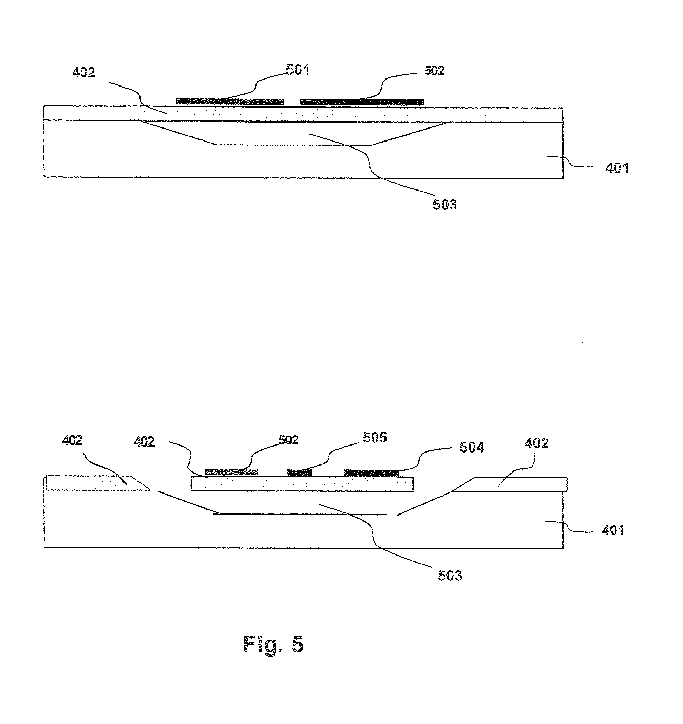

Fig. 5 illustrates two side cross section views of a flow sensor with patterned dielectric and conductor layers in relation to a channel and air bridge structure in accordance with aspects of some embodiments. In the first view, a channel 503 has been etched in the substrate 401 leaving an air bridge 402 of nitride above the channel 503. The air bridge portion of 402 supports temperature sensors and a heater such as the first upstream temperature sensor 501 and the second upstream temperature sensor 502. The second cross section view is at a right angle to the first cross section view and illustrates that the air bridge 402 supports temperature sensors and a heater 505 such as the second upstream temperature sensor 502, the second downstream temperature sensor 504 and heater 505.

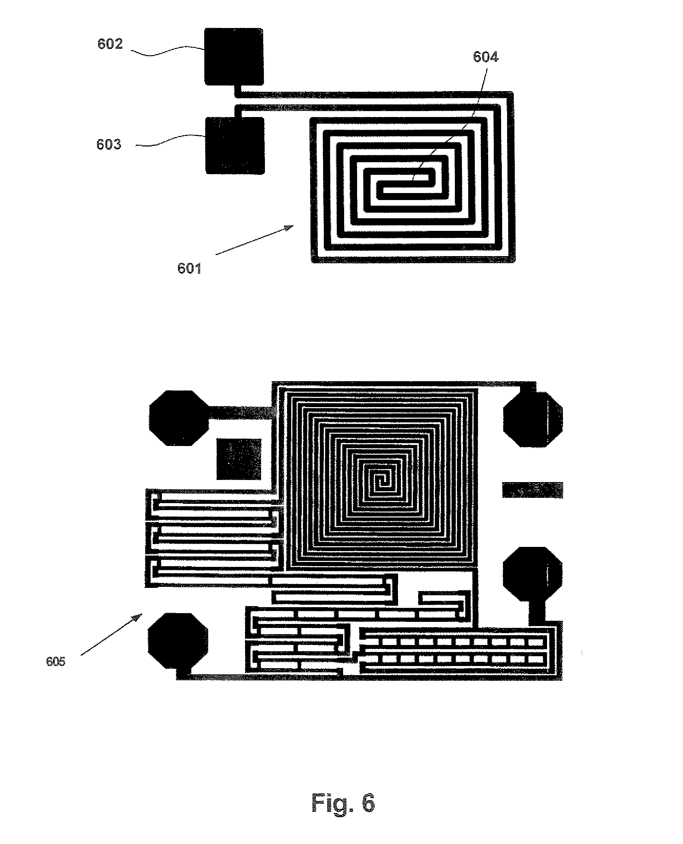

Fig. 6 illustrates dual spiral RTDs in accordance with aspects of the embodiments. In the upper RTD 601, an electrical current can flow into the first contact pad 602 and then into the dual spiral. After it reaches the center 604, the current flows back out of the dual spiral and eventually flows out the second contact pad 603. The lower RTD 605 illustrates the commercially available 0680 chip which is a laser trimmed permalloy RTD manufactured by Honeywell. The dual spiral structure is ideal for ferromagnetic RTDs because it minimizes the effect of magnetic fields.

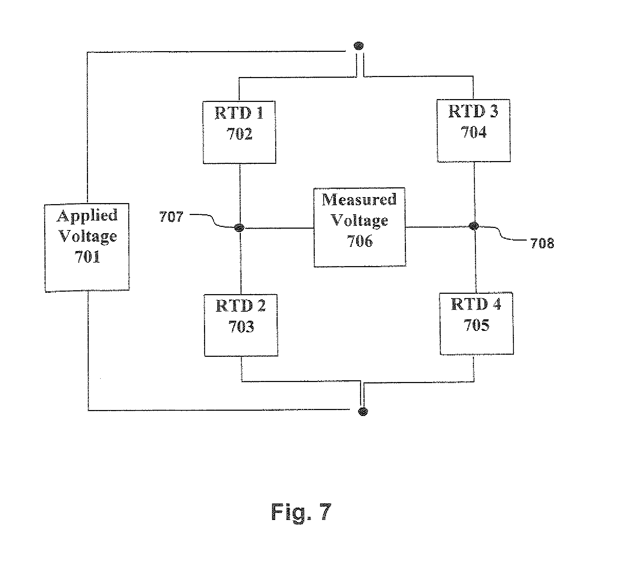

Fig. 7 illustrates a Wheatstone bridge in accordance with aspects of certain embodiments. An applied voltage 701 is applied across the Wheatstone bridge causing a current to flow through the legs of the bridge. The first leg has RTD 1 702 connected in series with RTD 2 703. The second leg has RTD 3 704 connected in series with RTD 4 705. Resistance differences among the RTDs lead to differences in the measured voltage 706 existing between node 1 707 and node 2 708. For example, RTD 1 702 and RTD 4 705 can be upstream temperature sensors while RTD 2 703 and RTD 3 704 are downstream temperature sensors. Fluid flowing past the heater causes resistance changes between the upstream and downstream sensors and thereby to a difference in the measured voltage 706.

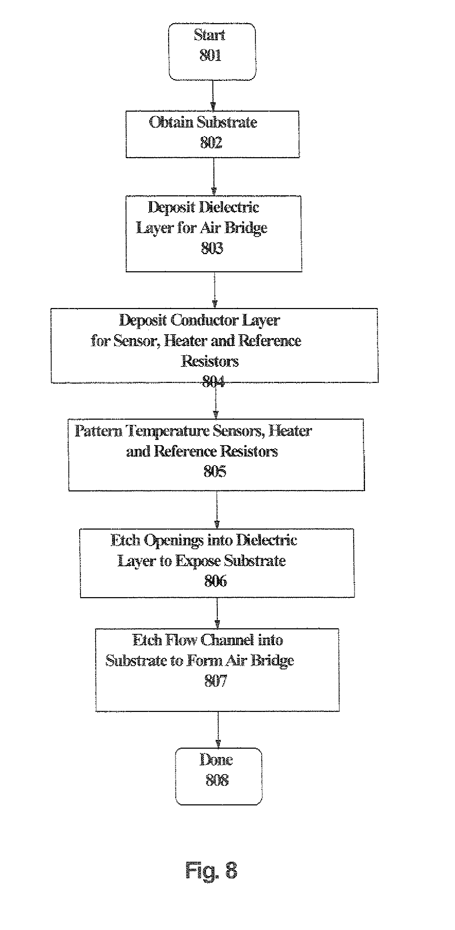

Fig. 8 illustrates a high level flow diagram of producing a flow sensor in accordance with aspects of the embodiments. After the start 801, a substrate is obtained 802. Next, a dielectric layer is deposited 803, followed by deposition of a conductive layer 804. Temperature sensors, a heater, and a reference resistor are produced 805. Openings are then etched to expose the substrate 806. The air bridge is formed out of the dielectric layer of 803 by etching the flow channel 807. Temperature sensors and heater reside on the air bridge of the completed flow sensor 808.

It will be appreciated that variations of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.
The embodiments of the invention in which an exclusive property or right is claimed are defined as follows. Having thus described the invention what is claimed is:

## Claims

1. A system comprising:
a substrate having a top;
an air bridge on the top wherein a fluid can flow through a channel between the air bridge and the substrate top and wherein the fluid has a flow direction;
a heater on the air bridge; and
a multiplicity of temperature sensors comprising two upstream temperature sensors and two downstream temperature sensors wherein the two upstream heating elements are on the air bridge and positioned upstream of the heater, wherein the two downstream heating elements are on the air bridge and positioned downstream of the heater, and wherein at least one of the heating elements has a dual spiral structure.

2. The system of claim 1 wherein the substrate comprises quartz.

3. The system of claim 1 wherein the substrate comprises glass.

4. The system of claim 1 wherein the two upstream, temperature sensors and the two downstream temperature sensors comprise a magnetoresistive material.

5. The system of claim 4 wherein the magnetoresistive material is permalloy.

6. The system of claim 1 wherein a Wheatstone bridge comprises the two upstream, temperature sensors and the two downstream temperature sensors.

7. The system of claim 1 further comprising a reference resistor wherein the reference resistor comprises the same materials as the upstream temperature sensor and the downstream temperature sensor.

8. A system comprising:
a substrate comprising bulk silicon and a nitride layer on the bulk silicon;
a channel through the bulk silicon and under the nitride layer wherein the nitride layer forms an air bridge, wherein a fluid can flow through the channel, and wherein the fluid has a flow direction;
a heater on the air bridge; and
a multiplicity of temperature sensors comprising two upstream temperature sensors and two downstream temperature sensors wherein the two upstream heating elements are on the air bridge and positioned upstream of the heater, wherein the two downstream heating elements are on the air bridge and positioned downstream of the heater, and wherein at least one of the heating elements has a dual spiral structure.

9. A method comprising:
obtaining a substrate having a top;
depositing a dielectric layer on the top;
forming a channel in the substrate and under the dielectric layer to form an air bridge wherein the air bridge spans the channel wherein a fluid can flow through the channel and wherein the fluid has a flow direction;
forming a heater and a multiplicity of temperature sensors on the air bridge wherein the multiplicity of temperature sensors comprises two upstream temperature sensors and two downstream temperature sensors wherein the two upstream temperature sensors are positioned upstream of the heater, wherein the two downstream temperature sensors are positioned downstream of the heater, and wherein at least one of the temperature sensors has a dual spiral structure.

10. The method of claim 9 wherein the substrate comprises bulk silicon, the dielectric layer is a nitride layer wherein the channel is formed under the nitride layer and through the bulk silicon and wherein the air bridge comprises nitride.
